# EUROPEAN PATENT SPECIFICATION

(11) **EP 2 175 595 B1**
(45) Date of publication and mention of the grant of the patent: **26.09.2012**
(21) Application number: 10152241.5
(22) Date of filing: 30.09.2005
(51) Int. Cl.: H04L 12/58, G06Q 10/10

(54) **System and method for provisioning an email account**
System und Verfahren zur Bereitstellung eines E-Mailkontos
Système et procédé pour la fourniture d'un compte de courrier électronique

(43) Date of publication of application: 14.04.2010
(62) Divisional of application: 05806466.8
(73) Proprietor: Teamon Systems Inc., Issaquah, WA 98027 (US)
(72) Inventor: Gardner, Darren L., Fall City, WA 98024 (US)
(74) Representative: Roberts, Gwilym Vaughan

(56) References cited:
- WO-A1-00/22543
- US-A1- 2005 038 859
- ANONYMOUS: "Gopher King Personal Email, Gold Email and Redirect Email User Manual", 20050222 , 22 February 2005 (2005-02-22), pages 1-92, XP007920105, Retrieved from the Internet: URL:http://web.archive.org/web/20050222082 214/http://www.gopherking.com/manual/Manua l05012002.htm [retrieved on 2012-01-19]

## Description

### Field of the Invention

The present invention relates to the field of communications systems, and, more particularly, to electronic mail (email) communications systems and related methods.

### Background of the Invention

Electronic mail (email) has become an integral part of business and personal communications. As such, many users have multiple email accounts for work and home use. Moreover, with the increased availability of mobile cellular and wireless local area network (LAN) devices that can send and receive emails, many users wirelessly access emails from mailboxes stored on different email storage servers (e.g., corporate email storage server, Yahoo, Hotmail, AOL, etc.).

Yet, email distribution and synchronization across multiple mailboxes and over wireless networks can be quite challenging, particularly when this is done on a large scale for numerous users. For example, different email accounts may be configured differently and with non-uniform access criteria. Moreover, as emails are received at the wireless communications device, copies of the emails may still be present in the original mailboxes, which can make it difficult for users to keep their email organized.

One particularly advantageous "push" type email distribution and synchronization system is disclosed in U.S. Patent No. 6,779,019 to Mousseau et al., which is assigned to the present Assignee and is hereby incorporated herein by reference. This system pushes user-selected data items from a host system to a user's mobile wireless communications device upon detecting the occurrence of one or more user-defined event triggers. The user may then move (or file) the data items to a particular folder within a folder hierarchy stored in the mobile wireless communications device, or may execute some other system operation on a data item. Software operating at the device and the host system then synchronizes the folder hierarchy of the device with a folder hierarchy of the host system, and any actions executed on the data items at the device are then automatically replicated on the same data items stored at the host system, thus eliminating the need for the user to manually replicate actions at the host system that have been executed at the mobile wireless communications device.

The foregoing system advantageously provides great convenience to users of wireless email communication devices for organizing and managing their email messages. Yet, further convenience and efficiency features may be desired in email distribution and synchronization systems as email usage continues to grow in popularity. For example, in new user accounts, an email provisioning and authentication system can run through a series of possible email server configurations to determine how to access an electronic mailbox for a user email account. The user can supply email address parameters such as an email address and password, but often becomes frustrated if the wrong email address parameter is typed. The user typically must wait a relatively long time to determine if something is wrong, or worse, the user may be given an advanced configuration screen and asked to provide difficult to know IP address numbers, ports and other entries because of the mistake. Some prior art systems have parsed emails and tried to provision, and as a subsequent step after failure, used MX records to aid in the process for accessing email. But those systems have not been used for provisioning in a more direct manner. Also, advanced configuration screens and added functions may not be required when an assured email service provider is used, i.e., one in which a system has provisioned numerous email accounts hosted by the assured email service provider numerous times.

International application publication no. WO 00/22543 discloses a method and system for identifying an electronic mail server to which a remote user belongs, which includes providing a remote access mail client associated with an access database containing records of servers supporting a specified electronic mail protocol, requiring the use at a remote computer with a browser to input his electronic mail address and log in password, parsing the mail address to obtain a presumed domain name of the user's server, interrogating the access database to determine whether it contains a record of a server corresponding to the presumed domain name, and retrieving the record of any corresponding server thus identified as the server to which the user may belong. If the database contains no record of a corresponding server, the domain name is assumed to be the server and is checked for the user's mail, after which the MX record and IP address are requested from the DNS database and are checked, and further steps are performed as necessary to identify the server to which the remote user belongs.

US patent application publication no. US 2005/0038859 discloses a system and method for configuring access to an electronic mailbox based on limited configuration parameters received from a user.

### Brief Description of the Drawings

Other objects, features and advantages of the present invention will become apparent from the detailed description of the invention which follows, when considered in light of the accompanying drawings in which:

FIG. 1 is schematic block diagram of a direct access electronic mail (email) distribution and synchronization system.

FIG. 2 is a schematic block diagram of an exemplary embodiment of user interface components of the direct access proxy of the system of FIG. 1.

FIG. 3 is a schematic block diagram of an exemplary embodiment of the Web client engine of the system of FIG. 1.

FIGS. 4 is a schematic block diagram of an exemplary embodiment of the mobile office platform engine machine for use in the system of FIG. 1.

FIG. 5 is a schematic block diagram of an exemplary embodiment of the database module of the system of FIG. 1.

FIG. 6 is a block diagram showing functional components of a configuration module and communications module that can be operative as part of a mobile office platform.

FIG. 7 is a high-level flowchart as an example of the process used for provisioning an email account hosted on an assured email service provider.

FIG. 8 is a block diagram of a system for learning mailbox configuration conventions.

FIG. 9 is a block diagram of a system for determining configuration parameters.

FIG. 10 is a block diagram showing details of configuration conventions using different expressions as a subset.

FIG. 11 is a block diagram illustrating a system for using symbolic expressions to represent conventions used for mailbox configuration parameters.

FIG. 12 is a block diagram showing an example of a representation for configuration conventions that are sets of email expressions formed by symbols.

FIG. 13 is a schematic block diagram illustrating an exemplary mobile wireless communications device that can be used with the Direct Access system shown in FIG. 1.

### Detailed Description of the Preferred Embodiments

Different embodiments will now be described more fully hereinafter with reference to the accompanying drawings, in which preferred embodiments are shown. Many different forms can be set forth and described embodiments should not be construed as limited to the embodiments set forth herein. Rather, these embodiments are provided so that this disclosure will be thorough and complete, and will fully convey the scope to those skilled in the art. Like numbers refer to like elements throughout, and prime notation is used to indicate similar elements in alternative embodiments.

A system as claimed in claim 1 provisions an electronic mail (email) account of a user for allowing access to a user's electronic mailbox from a remote device to retrieve user email. A communications module receives email address parameters entered by a user hosted on an assured email service provider from which previous users have been provisioned. A configuration module provisions the email account of the user based upon the email address parameters entered by the user. If provisioning fails, the communications module is operative for informing the user that the entered email address parameters are incorrect and requesting the user to enter corrected email address parameters without resorting to an advanced configuration parameter entry screen.

The communications module can be operative for receiving an email address and password as email address parameters. The communications module and configuration module can be operative on a mobile office platform and include a direct access proxy used for accessing an electronic mailbox and email account information. The communications module can be operative for receiving reentered email address parameters by receiving one of at least a new email address or password.

The configuration module can be operative for determining configuration parameters for accessing the user email account. The configuration module is also operative for generating a subset of possible configuration parameters by using heuristics of likelihood that a set of configuration parameters would be valid for accessing an electronic mailbox. A database stores relevant configuration conventions that are sets of email expressions formed by symbols that symbolically represent the conventions used by email providers for a set of configuration parameters. The configuration module can be operative for generating sets of possible configuration parameters that can be tried for accessing a user email account.

A method as claimed in claim 7 and computer-readable medium as claimed in claim 14 having computer-executable instructions with the described functions is also set forth.

Specific embodiments are set forth in the dependent claims.

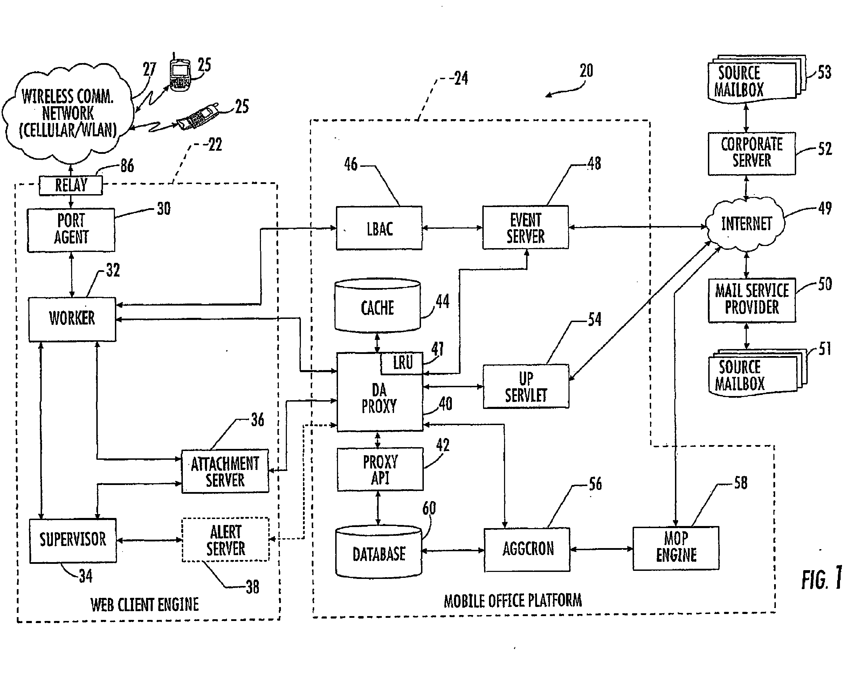

Referring initially to FIG. 1, a direct access (DA) email distribution and synchronization system 20 allows direct access to different mail sources, allowing messages to be transferred directly to a mobile wireless handheld device from a source mailbox. As a result, different mail stores need not be used for integrated external source mail accounts, and a permanent copy of an email in a local email store is not required.

Although this diagram depicts objects as functionally separate, such depiction is merely for illustrative purposes. It will be apparent to those skilled in the art that the objects portrayed in this figure can be arbitrarily combined or divided into separate software, firmware or hardware components. Furthermore, it will also be apparent to those skilled in the art that such objects, regardless of how they are combined or divided, can execute on the same computing device or can be arbitrarily distributed among different computing devices connected by one or more networks.

The direct access system **20** enables email users or subscribers to have email from third party email services pushed to various mobile wireless communications devices **25.** Users need not create a handheld email account to gain direct access to an existing external email account. The direct access system **20** may operate without performing aggregation as used in some prior art systems, in which emails are aggregated from multiple different source mailboxes to a single target mailbox. In other words, email need not be stored in an intermediate target mailbox, but instead may advantageously be accessed directly from a source mail store.

As illustrated in FIG. 1, the direct access system **20** illustratively includes a Web client (WC) engine **22** and a mobile office platform (MOP) **24.** These Web client engine **22** and mobile office platform **24** operate together to provide users with direct access to their email from mobile wireless communications devices **25** via one or more wireless communications networks **27,** for example. Both the Web client engine **22** and the mobile office platform **24** may be located at the same location or at separate locations, and implemented in one or more servers. The web client engine **22** illustratively includes a port agent **30** for communicating with the wireless communications devices **25** via the wireless communications network(s) **27,** a worker **32,** a supervisor **34,** and an attachment server **36,** which will be discussed further below. An alert server **38** is shown in dashed lines, and in one preferred embodiment, is not used, but could be part of the system in yet other embodiments.

The mobile office platform **24** illustratively includes a DA proxy **40,** and a proxy application programming interface (API) **42** and a cache **44** cooperating with the DA proxy. The mobile office platform **24** also illustratively includes a load balance and cache (LBAC) module **46,** an event server **48,** a universal proxy (UP) Servlet **54,** an AggCron module **56,** a mobile office platform (MOP) engine **58,** and a database (DB) engine **60,** which will be discussed in further detail below. The Least Recently Used (LRU) cache **41** caches new messages, and can release messages and objects that were least recently used.

The supervisor **34** processes new mail notifications that it receives from the direct access proxy **40.** It then assigns a job, in the form of a User Datagram Protocol (UDP) packet, to the least-loaded worker **32,** according to the most recent UDP heartbeat the supervisor **34** has received. For purposes of this description, heartbeat is a tool that monitors the state of the server. Additionally, the supervisor **34** will receive a new service book request from the direct access proxy **40** to send service books to the mobile wireless communication device for new or changed accounts. A service book can be a class that could contain all service records currently defined. This class can be used to maintain a collection of information about the device, such as connection information or services, such as an email address of the account.

The worker **32** is an intermediary processing agent between the supervisor **34** and the port agent **30,** and responsible for most processing in the Web client engine **22.** It will retrieve e-mail from a universal proxy **54,** via a direct access proxy, and format e-mail in Compressed Multipurpose Internet Mail Extension (CMIME) as a type of Multipurpose Internet Mail Extension, and send it to the port agent **30,** for further processing. Its responsibilities include the following tasks: (1) messages sent to and received from the handheld; (2) message reply, forward and more requests; (3) Over The Air Folder Management operation (OTAFM); (4) attachment viewing; and (5) service book.

The port agent **30** acts as a transport layer between the infrastructure and the rest of the Web client engine **22.** It is responsible for delivering packets to and from the mobile wireless communications device. To support different integrated mailboxes with one device, more than one service book can be used, and each service book can be associated with one integrated mailbox. A port agent **30** can include one Server Relay Protocol (SRP) connection to a relay, but it can also handle multiple SRP connections, and each connection may have a unique Globally Unique Identifier (GUID) associated with a service book. The attachment server **36** provides service for document/attachment conversion requests from workers **32.**

The direct access proxy **40** provides a Web-based Distributed Authoring and Versioning (WebDAV) interface that is used by the worker **32** to access account and mailbox information. This provides functionality to create, change and move documents on a remote server, e.g., a Web server. The direct access proxy **40** typically will present an asynchronous interface to its clients. The LBAC module **46** is used by a notification server and the Web client engine **22** components to locate the proper DA proxy for the handling of a request. The universal proxy Servlet **54** abstracts access to disparate mail stores into a common protocol. The event server **48** responds to notifications of new messages from corporate servers **52** and/or mail service providers **50,** which may be received via the Internet **40,** for example. The notifications are communicated to the direct access proxy **40** by the AggCron module **56** and the event server **48** so that it may initiate checking for new mail on source mailboxes **51, 53** of the mail service providers **50** and/or corporate servers **52.** The proxy API can be a Simple Object Access Protocol (SOAP) Daemon **42** and is the primary interface into a database **60,** which is the primary data store for the mobile office platform **24.** The AggCron module **56** may also periodically initiate polling for new messages as well.

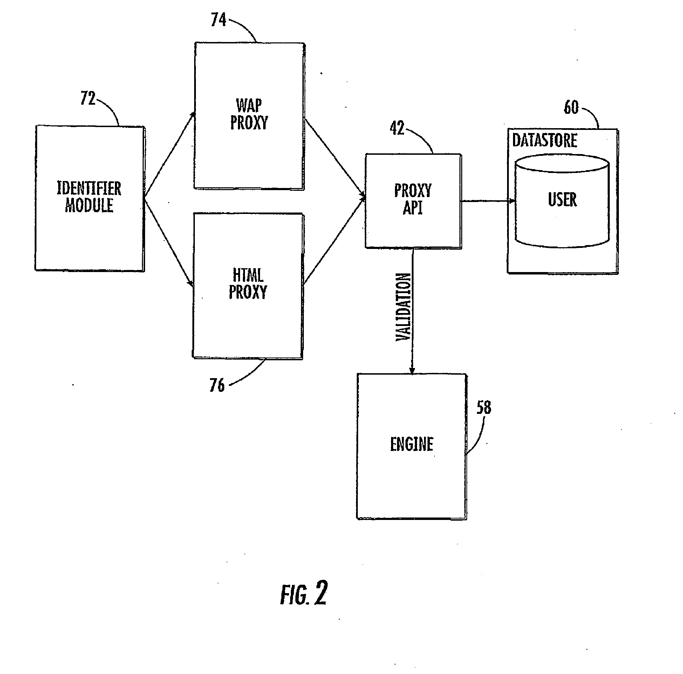

FIG. 2 is a high-level block diagram showing user interface components of the direct access proxy **40.** More particularly, the direct access proxy **40** illustratively includes an identifier module **72** with various downstream proxy modules for different communication formats, such as a Wireless Application Protocol (WAP) proxy module **74** and a Hypertext Markup Language (HTML) proxy module **76.** Of course, it will be appreciated by those skilled in the art that other types of proxy modules for other communications formats may also be used.

The identifier module **72** provides a centralized authentication service for the direct access system **20** and other services. An authentication handshake may be provided between an ID service and direct access system **20** to ensure that users have the proper credentials before they are allowed access to the direct access system **20.** The ability to switch from managing a Web client to a direct access system, or vice versa, may occur without requiring the user to reenter any login credentials. Any Web client and direct access may share session management information on behalf of a user.

The WAP proxy **74** provides a wireless markup language (WML)-based user interface for configuring source mailboxes with the mobile office platform **24.** The HTML proxy **76** provides an HTML-based user interface for configuring of source mailboxes in the MOP **24.** The proxy API **42** (SOAP Daemon) is the primary interface into the database **60.** The engine **58** is a protocol translator that connects to a source mailbox to validate configuration parameters. The database **60** is the primary user data store for the mobile office platform **24.**

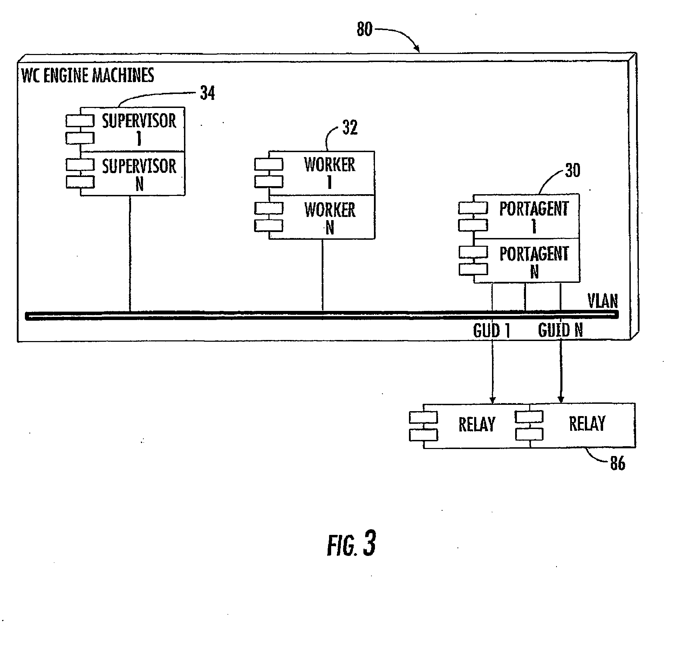

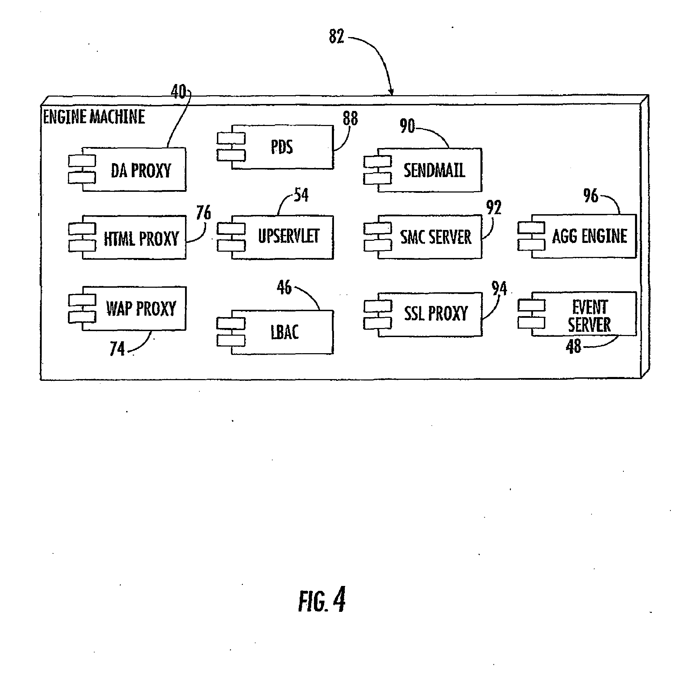

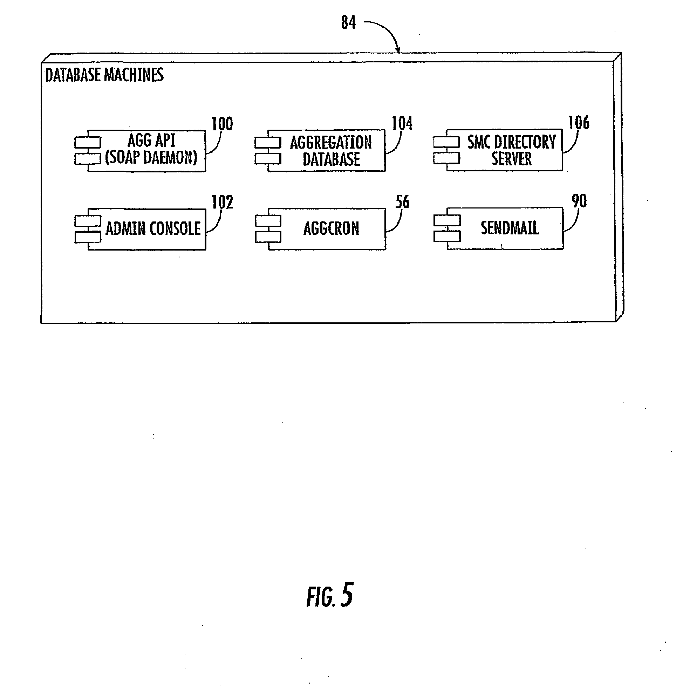

FIGS. 3, 4 and 5 illustrate respective Web client engine machines **80** (FIG. 3), an engine machine **82** (FIG. 4), and database machine **84** (FIG. 5). The Web client engine machine **80** illustratively includes the supervisors **34,** workers **36,** and port agents **38.** Relays **86** cooperate with the port agents **38** using a GUID.

The engine machine **82** illustratively includes a direct access proxy **40,** HTML proxy **76**, WAP proxy **74,** PDS module **88,** UP Servlet **54,** LBAC module **46,** a sendmail module **90,** an secure mail client (SMC) server **92,** a secure sockets layer (SSL) proxy **94,** an aggregation engine **96,** and event server **48.** The SMC server **92** cooperates with corresponding SMC modules resident on certain corporate networks, for example, to convey email data between the mobile office platform **24** and source mailboxes. The database machine **84** may include an aggregation application programming interface (API) **100** as a SOAP Daemon, an administration console **102,** an aggregation database **104,** the AggCron module **56,** an SMC directory server **106,** and a send mail module **90.**

The various components of the Web client engine **22** may be configured to run on different machines or servers. The component binaries and configuration files may either be placed in a directory on the network or placed on a local disk that can be accessed to allow the appropriate components to run from each machine. In accordance with one exemplary implementation, deployment may include one supervisor, two workers, and one port agent for supporting 30,000 external source mailboxes, although other configurations may also be used. Actual production deployment may depend on the results of load, performance and stress testing, as will be appreciated by those skilled in the art.

For the mobile office platform **24** direct access components, modules and various functions, machines are typically installed in two configurations, namely engine machines (FIG. 4) and database machines (FIG. 5). While these machines may have all of the above-described components installed on them, not all of these components need be active in all applications (e.g., aggregation may be used with systems that do not support push technology, etc.). Once again, actual production deployment may depend on the results of load, performance and stress testing.

The mobile office platform **24** architecture in one known technique advantageously uses a set of device/language-specific extensible Stylesheet Language (XSL) files, which transform application data into presentation information. In one non-limiting example, a build process takes a non-localized XSL and generates a localized XSL for each supported language. When the XSL is used, it is "compiled" in memory and cached for repeated use. The purpose of pre-localizing and caching the templates is to reduce the CPU cycles required to generate a presentation page.

Branding may also be performed. Initially, a localized XSL may build a WAP application to access aggregated email accounts. A WAP proxy application may be localizable and support multiple WAP devices. For each logical page of an application, a device-specific XSL may be created, which may be localized for each language/country supported. This rendering scheme may support not only WAP devices, but also SMTP, HTML and POP proxies, for example. In branding, each page of a given application may be customized for each different brand.

The branding of a page may be accomplished through XSL imports, including the use of a Java application programming interface (API) for XML processing (JAXP) feature to resolve the imports dynamically. This need not require that each combined page/brand template be compiled and cached. By way of example, in a sample template directory, first and second pages for a single language/country may be combined with branded counterparts to generate a plurality of distinct template combinations. It is also possible to profile memory requirements of an application by loading templates for a single language, device/application and brand. An HTML device may include a set of templates that are large compared to other devices.

In one known technique, the mobile office platform **24** advantageously builds processes and takes non-localized files and language-specific property files and combines them to make each non-localized XSL into an XSL for each supported language. A separate XSL for each language need not be used, and the language factor may be removed from the memory usage equation. A JAXP API may be used to extend XSL with Java classes. The extensions may take various forms, for example, including extension elements and extension functions. A template may be transformed by creating and initializing an extension object with a locale and passing an object to a transformer. The system can remove multiple imports and use less memory. HTML templates can use template importing to enable template reuse, much like Java classes, and reuse other Java classes through a mechanism like derivation or importing.

In the direct access system **20,** users receive email on their mobile wireless communications devices 25 from multiple external accounts, and when replying to a received message, the reply-to and sent-from address integrity is preserved. For example, for a user that has an integrated Yahoo! account (user@yahoo.com) and a POP3 account (user@pop3.com), if they receive an email at user@yahoo.com, their replies generated from the device **25** will appear to come from user@yahoo.com. Similarly, if a user receives an email at user@pop3.com, their replies will appear to come from user@pop3.com.

Selection of the "sent from" address is also available to a user that composes new messages. The user will have the ability to select the "sent from" address when composing a new message. Depending on the source mailbox type and protocol, the message may also be sent through the source mail service. This functionality can be supported by sending a configuration for each source mailbox, for example, as a non-limiting example, a service book for each source mailbox **51, 53** to the mobile wireless communications device **25.**

As noted above, a service book is a class that may include all service records currently defined. This class may be used to maintain a collection of information about the device, such as connection information. The service book may be used to manage HTTP connections and mail (CMIME) information such as account and hierachy. At mobile wireless communications devices **25,** a delete service book request may be sent when a source mailbox **51, 53** is removed from the account. The service book may also be resent to the device **25** with a viewable name that gives the user some indication that the selection is no longer valid.

A sent items folder may also be "synchronized." Any device-originated sent messages may be propagated to a source account and stored in a sent mail folder, for example. Also, messages deleted on the device **25** may correspondingly be deleted from the source mailbox **51, 53.** Another example is that device-originated marking of a message as read or unread on the device **25** may similarly be propagated to the source mailbox **51, 53.** While the foregoing features are described as source-dependent and synchronizing one-way, in some embodiments certain synchronization features may in addition, or instead, propagate from the source mailbox/account to the handheld device, as will be appreciated by those skilled in the art.

When available, the mail service provider or corporate mail server may be used for submission of outgoing messages. While this may not be possible for all mail service providers or servers, it is preferrably used when available as it may provide several advantages. For example, subscribers to AOL will get the benefit of AOL-specific features like parental controls. Furthermore, AOL and Yahoo users, as non-limiting examples, will see messages in their sent items folder, and messages routed in this manner may be more compliant with new spam policies such as Sender Policy Framework (SPF) and Sender Id. In addition, messages sent via corporate mail servers **52** will have proper name resolution both at the global address list level and the personal level. It should be understood, however, that the use of the mail service provider **50** to deliver mail may be dependant on partner agreements and/or protocol, depending upon the given implementation.

The architecture described above also advantageously allows for features such as on-demand retrieval of message bodies and attachments and multiple folder support. Morever, a "this-is-spam" button or indicator may be used allowing company labels and other service provider-specific features when supported by an underlying protocol, as will be appreciated by those skilled in the art.

One particular advantage of the direct access system 20 is that a user need not configure an account before integrating additional accounts. However, a standalone email address may be used, and this address advantageously need not be tied to a mailbox size which the subscriber is required to manage. For example, the email account may be managed by an administrator, and any mail could be purged from the system after a predetermined period of time (i.e., time-based auto-aging with no mailbox limit for all users).

Additionally, all aspects of any integrated email account creation, settings and options may advantageously be available to the user from their mobile wireless communications device **25** Thus, users need not visit an HTML site and change a setting, create a filter, or perform similar functions, for example. Of course, an HTML site may optionally be used.

As a system Internet email service with the direct access system **20** grows, ongoing emphasis may advantageously be placed on the administrative site to provide additional information to carrier administrators, support teams, and similar functions. However, in some instances a mail connector may be installed on a personal computer, and this functionality may not always be available from the mobile wireless communications device.

The Web client engine **22** may advantageously support different features including message to handheld (MTH), message from handheld (MFH), forward/reply a message, request to view more for a large message (e.g., larger than 2K), request viewing message attachment, and over the air folder management (OTAFM). These functions are explained below.

For an MTH function, each email account integrated for a user is linked with the user device through a Web client service book. For each new message that arrives in the Web client user mailbox, a notification that contains the new message information will typically be sent to a Web client engine supervisor component (FIG. 3), which in turn will assign the job to an available worker with the least load in the system. The chosen worker **32** will validate the user information and retrieve the new message from the user source mailbox and deliver it to the user device.

In an MFH function, MFH messages associated with a Web client service book are processed by the Web client engine **22** and delivered to the Internet **49** by the worker **32** via the simple mail transfer protocol (SMTP) or native outbox. If a user turns on the option to save the sent message to the sent items folder, the direct access proxy will save a copy of the sent message to this folder.

In a Forward/Reply/More function, the user can forward or reply an MTH or MFH message from the mobile wireless communications device **25** as long as the original message still existed in the direct access proxy cache or in user mailbox. For MTH, the worker **32** may send the first 2K, for example, or the whole message (whatever is less) to the user device. If the message is larger than 2K, the user can request MORE to view the next 2K of the message. In this case, the worker **32** will process the More request by retrieving the original message from the user source mailbox, and send back the 2K that the device requests. Of course, in some embodiments more than 2K of message text (or the entire message) may be sent.

In an attachment-viewing function, a user can view a message attachment of a popular document format (e.g., MS Word, MS Power Point, MS Excel, Word Perfect, PDF, text, etc.) or image format (GIF, JPEG, etc). Upon receiving the attachment-viewing request, which is implemented in a form of the More request in this example, the worker **32** can fetch the original message from the user source mailbox via the direct access proxy, extract the requested attachment, process it and send result back to the user device. The processing requires that the original message has not been deleted from the user Web client mailbox.

In the save sent message to sent items folder function, if the user turns this option on, the worker **32** places a copy of each MFH message sent from the user device in the user sent items folder in the mailbox. In over the air folder management, the Web client OTAFM service maintains any messages and folders in the user mailbox synchronized with the user device over the air.

Whenever a message in the user source mailbox is Moved/Deleted, the associated message on the device may also be Moved/Deleted accordingly, and vice-versa. When a message is Moved/Deleted on the device, the associated message in the user Web client mailbox may also be Moved/Deleted accordingly. Similarly, when a folder is Added/Removed/Renamed from the user Web client mailbox, the associated folder on the device may be Added/Removed/Renamed, and vice-versa.

The system **20** may advantageously support different subsets of various messaging features. For example, in the message to handheld function, the mobile office platform **24** may be responsible for connecting to the various source mailboxes **51, 53** to detect new emails. For each new mail, a notification is sent to the Web client engine **22** and, based on this notification, the supervisor **34** chooses one of the workers **32** to process that email. The chosen worker will fetch additional account information and the contents of the mail message from the direct access proxy **40** and deliver it to the user device **25.**

In a message sent from handheld function, the MFH could be given to the direct access proxy **40** from the Web client worker **32.** In turn, the mobile office platform **24** delivers a message to the Internet **49** by sending through a native outbox or sending it via SMTP. It should be understood, however, that the native outbox, whenever possible, may provide a better user experience, especially when taking into account current anti-spam initiatives such as SPF and sender Id.

In a message deleted from handheld function, when a message is deleted from the device **25,** the Web client engine **22** notifies the mobile office platform **24** via the direct access proxy **40.** As such, the mobile office platform **24** can delete the same message on the source mailbox.

When handling More/Forward/Reply/Attachment viewing requests, the Web client worker **32** may request an original mail from the direct access proxy **40.** It will then process the request and send the results to the mobile wireless communications device **25.** The architecture may additionally support on-demand retrieval of message parts and other upgrades, for example.

Upon the integration of a new source mailbox **51, 53,** the service book notification from the alert server **38** may be sent to the supervisor **34,** which assigns this notification to a worker **32** for sending out a service record to the device. Each source mailbox **51, 53** may be associated with a unique service record. In this way, each MFH message is linked with a source mailbox **51, 53** based on the service record on the device.

The system **20** may also poll the integrated external mailboxes periodically to check for new mail and to access any messages. The system **20** may further incorporate optimizations for polling bandwidth from an aggregation component allowing a quick poll. The system **20** can also advantageously support a large active user base and incorporate a rapidly growing user base.

The topology of load balancing can be based on the size of a component's queue and its throughput. These load statistics can be monitored by a mechanism in one example called the UDP Heartbeat, as described before. If a component is overloaded or has a large queue size, the component will have less chance to get an assigned job from other components. In contrast, a component will get more assigned jobs if it completes more jobs in the last few hours than other components. With this mechanism, the load could distribute over heterogeneous machine hardware, i.e., components running on less power machines will be assigned fewer jobs than those on machines with more power hardware.

General load balancing for any mobile office platform components can be accomplished through the use of a load balancer module, for example, a BIG-IP module produced by F5 Networks of Seattle, Washington. BIG-IP can provide load balancing and intelligent layer 7 switching, and can handle traffic routing from the Internet to any customer interfacing components such as the WAP and HTML proxies. The use of a BIG-IP or similar module may provide the application with pooling capabilities, fault tolerance and session management, as will be appreciated by those skilled in the art.

Typically, access to a single source mailbox **51, 53** can be from a single direct access proxy **40** over a persistent connection. Any requests on behalf of a particular user could persist to the same machine in the same direct access clustered partition. As certain components are system-wide and will be handling work for users across many partitions, these components can be designed to determine which direct access partition to communicate with on a request-by-request basis.

The load balancer and cache (LBAC) **46** may support this function. The LBAC **46** is a system-wide component that can perform two important functions. The first of these function is that it provides a mapping from the device PIN to a particular direct access proxy **40,** while caching the information in memory for both fast access and to save load on the central database. Secondly, as the direct access proxy **40** will be run in clustered partitions, the LBAC **46** may distribute the load across all direct access proxies within any partition.

The LBAC **46** can be formed of different components. For example, the code which performs the load balancing can be an extended version of a secure mail connector. The code can also perform lookups to the central database and cache the results (LBAC).

In one non-limiting example, when a worker requires that a direct access proxy **40** perform work, it provides the LBAC **46** with a device PIN. The LBAC **46** will discover which partition that PIN is associated with by looking in its cache, or retrieving the partition identifier from a central database (and caching the result). Once the partition is known, the LBAC **46** then consults its cache to see which direct access proxy in that partition has been designated to handle requests for that PIN. If no mapping exists, the LBAC requests the PDS to create a new association on the least loaded DA proxy **40** (again caching the result). Finally, the LBAC **46** responds to the worker **32** with the connection information for the proper direct access proxy to handle that particular request.

The secure mail connector **88** may run in failover pairs, where one is an active master and the other is a secondary standby. Internal data structures may be replicated in real-time from the master to the standby. Multiple LBACs **46** can be run for scalability and fault tolerance, but typically would require an external connection balancing component, such as the BIG-IP component as explained before.

A receiving component in the Web client engine **22** saves the job that has been assigned to it from other components to a job store on the disk before processing. It can update the status of the job and remove the job from the job store when the job processing is completed. In case of component failure or if the process is restarted, it can recover the jobs from the job store and, based on the current statuses of these jobs, continue processing these jobs to the next state, saving the time to reprocess them from the beginning.

Any recovery from the standpoint of MTH/MFH can be achieved through current polling behavior and on the Web client engine **22** recovery mechanisms. From within the mail office platform components, until a message has been successfully delivered to a Web client engine **22,** that message is not recorded in the partition database **60.** During the next polling interval, the system can again "discover" the message and attempt to notify the Web client engine **22.** For new mail events, if an event is lost, the system can pick up that message upon receiving the next event or during the next polling interval. For sources supporting notifications, this interval could be set at six hours, as one non-limiting example. For messages sent from the Web client engine **22,** and for messages that have been accepted by the Web client engine, recovery can be handled by different Web client engine components.

The Web client engine **22** may advantageously be horizontally and vertically scalable. Multiple supervisors **34** can be registered/configured with direct access proxies **40** to provide the distribution of the notification load and the availability of engine service. Multiple workers **32** and port agents **30** can run on the same machine or across multiple machines to distribute load and achieve redundancy. As the number of users grows, new components can be added to the system to achieve high horizontal scalability.

It is possible for a new component to be added to or removed from the system automatically without down time. Traffic can automatically be delegated to a new component and diverted away from failed components. Each component within the mobile office platform **24** can be deployed multiple times to achieve horizontal scalability. To achieve vertical scalability, each mobile office platform **24** component can be a multi-threaded process with a configurable number of threads to scale under heavy load. Pools of connections can be used to reduce the overhead of maintaining too many open connections.

The embodiments as described set forth a system and method in which the system does not have to provision new user accounts by running through a series of possible email server configurations to determine how to access the source mailbox. In prior applications, for example, if a user provided an email address of Sally@somedomain.com, the system would try a series of possible server domain names such as mail.somedomain.com, pop.somedomain.com, etc. until it finds one that works. If the system goes through an entire list of possibilities to validate an account, this can result in significant delays. Also, users become frustrated if the users type in the wrong email address parameter, such as the wrong log-in name and password, and have to wait a relatively long time to determine that nothing has been done wrong, or worse, if the user is given an advanced configuration screen where the user is asked to provide IP address numbers, ports and other difficult items to remember because of the mistake.

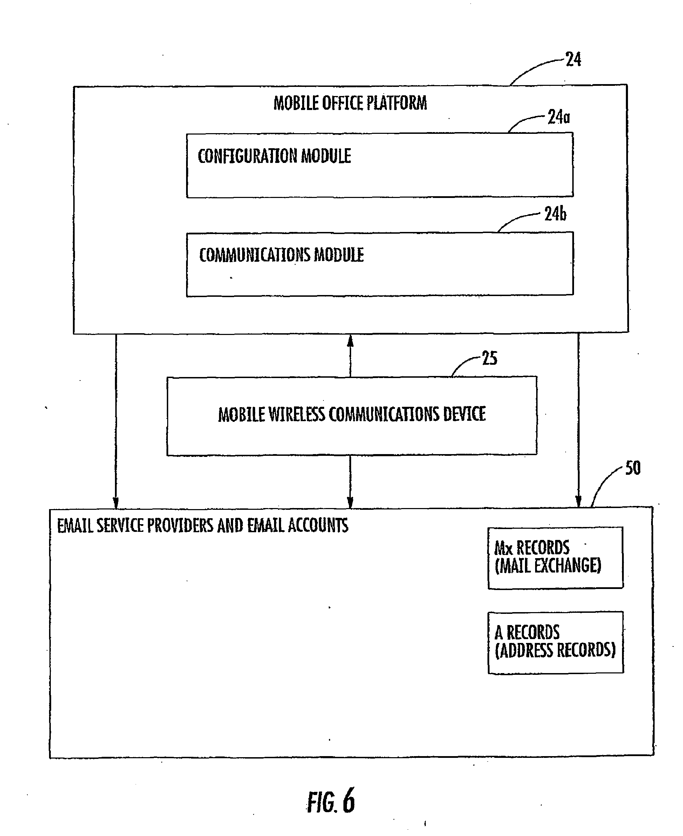

FIG. 6 shows basic components of the mobile office platform **24** that includes functional components of a configuration module **24a** and communications module 24b, and operative with the preferred and assured email service providers **50** having email accounts and MX records and A records. A mobile wireless communications device **25** is operative with mobile office platform **24** and email service provider **50** with email accounts. The configuration module **24a** and communications module **24b** are operative components having general functions corresponding to one or more components as described before relative to FIGS. 1-5.

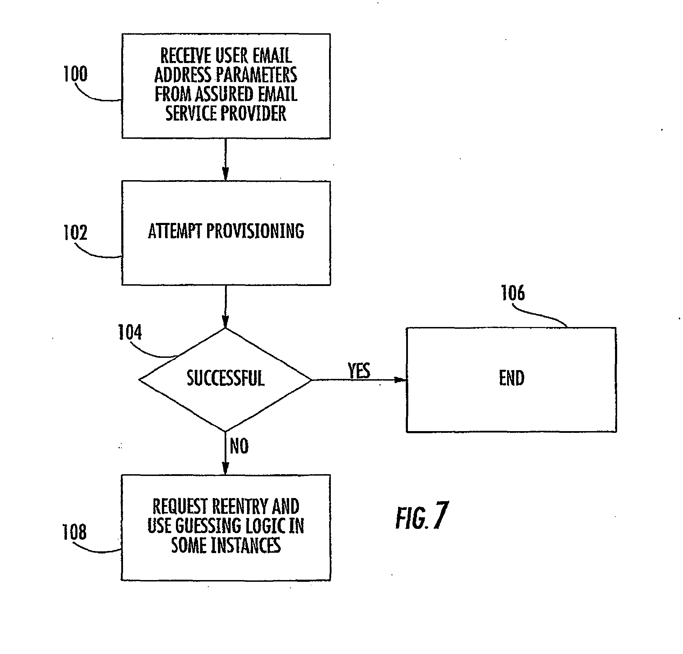

FIG. 7 is a high-level flowchart illustrating an example of a process used for provisioning an electronic mail (email) account of a user for allowing access to an electronic mailbox from a remote device to retrieve email. The process receives email address parameters entered by a user from an email account hosted by an assured email service provider from which previous users have been provisioned (block 100). Provisioning is attempted (block 102), and the system checks if provisioning was successful (block 104). If provisioning fails, the user is informed that email address parameters are incorrect and requesting the user to enter corrected email address parameters without resorting to an advanced configuration parameter entry screen (block 108). In some instances, guessing logic can be used.

Guessing logic as will be described can be used as an aid for provisioning an account, although with email accounts hosted on assured providers, it typically would not be necessary. Guessing logic, though, can be used in some instances.

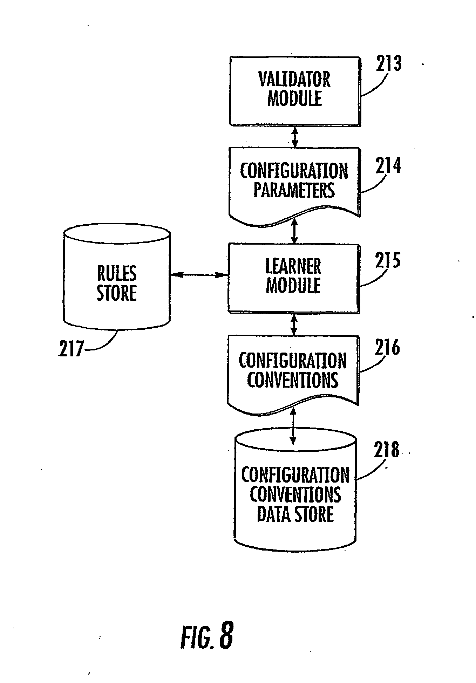

FIG. 8 illustrates a system for automatically learning conventions used by mail domains. The system is part of the intelligent server **211,** which includes a validator module **213** that determines a valid set of configuration parameters **214.** The server includes a learner module **215,** which accepts the valid set of configuration parameters **214** and generates configuration conventions **216.** A configuration conventions store **218** is operative as a database preferably part of the server, but could be separate. It stores the conventions for each mail domain. The learner module **215** is operative with a rules store **217** as a database of different rules.

The validator module **213** determines a valid set of configuration parameters **214** for a respective mailbox based on a limited number of configuration parameters provided by the user. In an example embodiment, the validator module **213** may try to access the respective mailbox using a set of best guesses (estimates) for the configuration parameters as provided by the service that invokes the validator module **213.** In the example embodiment, if the access attempt fails, the validator module **213** may request additional information from the user until the validator module **213** has a valid set of configuration parameters. The validator module **213** accesses the mailbox being configured by using the access protocol relevant to the mailbox.

In an example embodiment, the validator module **213** would use POP to access a POP enabled mailbox to verify that the configuration parameters **214** are valid. In other example embodiments, the validator module **213** may use IMAP to access IMAP enabled mailboxes. As is obvious to those skilled in the art, there are many access protocols that may be used to access mailboxes. After attempting to validate the configuration parameters **214,** the validator module **213** returns status information and the valid set of configuration parameters **214.**

The learner module **215** accepts the configuration parameters **214** and generates the configuration conventions **216** for the configuration parameters **214.** The configuration convention **216** is a manner of formatting the conventions used for configuration parameters for storage in the configuration convention store **218.** In an example embodiment, if the users email address is "john.smith@foo.com", and the login name parameter required by the relevant mail host is "jsmi", an expression within the configuration convention **216** for the login name parameter may be

### <FirstName(1)><LastName(3)>.

A variety of formats could be used in implementing a configuration convention **216.** The learner module **215** may apply certain tests to the configuration parameters **214** to ensure that the configuration parameters **214** are credible. In an example embodiment, the learner module **215** will only learn conventions in cases where the mail host is in the same mail domain as the email address of the user, to avoid attempts by "hackers" to pollute the learned configuration conventions **216.** Other tests are envisioned to ensure the integrity of the learned configuration conventions **216.** The learner module **215** may also apply rules that are stored in the rules store **217.** These rules may be based on business criteria or other relevant criteria. In an example embodiment, the rules may indicate that certain conventions are not to be learned for security reasons.

Configuration conventions **216** that are deemed acceptable by the learner module **215** are then stored in the configuration conventions store **218.** In an example embodiment, the configuration conventions store **218** may include standard configuration conventions applicable to all domains, as well as one or more of the automatically learned configuration conventions **216** for each mail domain. Mail domains may have more than one associated configuration convention, as there may be multiple ways and protocols in which the mailbox on the mail domain may be accessed.

Services may then access the configuration conventions **216** from the configuration convention store **218** to generate a list of potential sets of configuration parameters when configuring access to one or more of the user mailboxes.

Based on empirical evidence, the vast majority of email providers adhere to a number of conventions when it comes to the configuration parameters used to access mailboxes. Almost all of the POP mail hosts in existence today are prefixed with "mail.", "pop.", or "pop3.". It is likely that a user with an email address of "john.smith@foo.com" would be able to access their POP-enabled mailbox through the host named "mail.foo.com", "pop.foo.com" or "pop3.foo.com". These conventions can be captured in a data store and it is possible for the service that requires access to the user's mailbox to use the conventions to generate potentially valid sets of configuration parameters. The server can then attempt to determine a valid set of configuration parameters that can be used to access the user's mailbox. The set of configuration parameters for the user's mailbox can be determined when the user only provides an email address and password. The system can also successfully determine the configuration parameters in most cases. As new conventions are introduced or are discovered, they may be easily added to the data store.

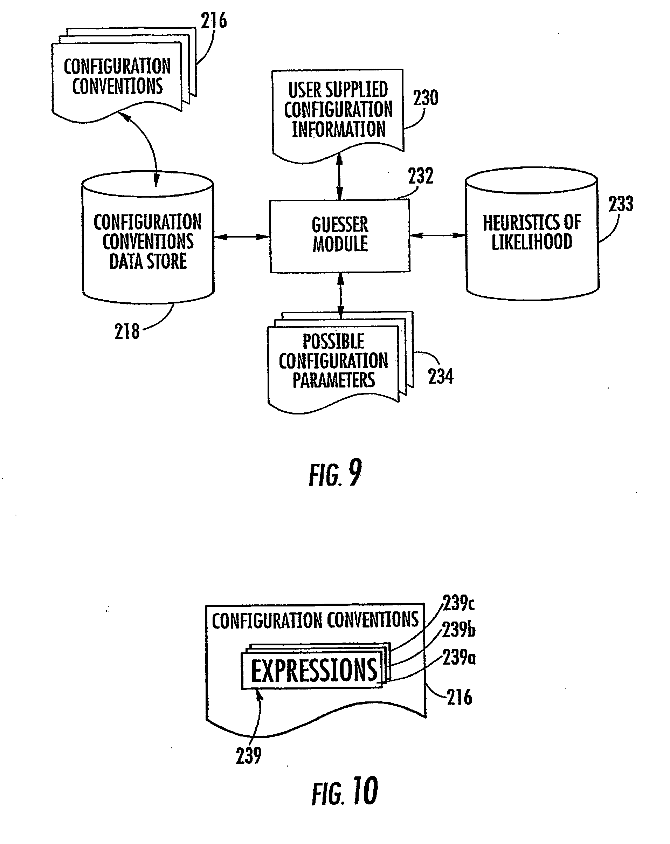

A guesser or determination module **232** (FIG. 9) is part of the server **211** and operative as the mailbox interface module and generates possible sets of configuration parameters **234** based on user supplied configuration information **230,** coupled with configuration conventions **216** stored in the configuration conventions data store **218.** Services may then use the sets of configuration parameters **234** to determine the correct set of configuration parameters required to access the user's mailbox.

FIG. 10 shows further details of the configuration conventions **216.** It should be understood that configuration conventions are sets of e-mail expressions formed by symbols, which can also be literals, such as a port number. In an example embodiment, a configuration convention **216** may comprise an expression for the server name parameter and an expression for the login name parameter. If, in the example embodiment, the email provider uses the login name "jsmith" and the mail domain "mail.foo.com" given an email address "john.smith@foo.com", the login name expression in the configuration convention **216** may be <FirstName(1)><LastName>, while the server name expression may be "mai.l.<MailDomain>". In this example, the number in brackets within the expression <FirstName(1)>, represents the number of characters to be used from the parameter <FirstName>, ie. "j". As is obvious to one skilled in the art, a variety of different symbolic representations may be used to represent the conventions for configuration parameters. The configuration conventions data store **218** stores the configuration conventions **216.** As new conventions are introduced or discovered, they may be easily added to the configuration conventions store **218.**

The module **232** generates the sets of possible configuration parameters **234** based on user-supplied information **230,** and relevant configuration conventions **216** from the configuration conventions data store **218.** In many cases, the users email address provides sufficient information to be able to generate an accurate set of configuration parameters. In the example embodiment, given the email address "jane.doe@foo.com", the module **232** would use the configuration conventions **216** to generate the possible configuration parameters **234** "jdoe" for the login name, and "mail.foo.com" for the server name.

Email providers use many conventions when determining configuration parameters, and as a result, the module **232** generates many sets of possible configuration parameters **234.** To reduce the number of sets generated, the module **232** may only generate a subset of the sets of possible configuration parameters **234** based on additional user information, or based on heuristics of likelihood **233** that a given set of configuration parameters **234** may be successful under a given scenario. In an example embodiment, the user may indicate that only configuration conventions **216** with a protocol expression **239** of "IMAP" should be considered. In the example, the heuristics **233** could include tracking statistics about the number of attempts and percentage of successes using a given configuration convention **216,** and thereby only generate possible configuration parameters **234** based on this configuration convention **216** if certain conditions are met.

Although many email providers adhere to fairly standard conventions for configuration parameters, such as naming the mail host "mail.<MailDomain>" and matching the login name to the email address, there are many other email providers that employ less obvious conventions, such as setting the login name to be <FirstName(1)><LastName(3)>, which in the case of the user with e-mail address of 'john.smith@foo.com" would translate to the login name of "jsmi". In the case of protocols that use uniform resource locators (URL) to indicate the location of the mailbox, the conventions are even less standard, since the login names are often embedded in the middle of the URL.

By capturing these conventions in the data store, it is possible for the service that requires access to the user's mailbox to use the conventions to generate potentially valid sets of configuration parameters, and then attempt to determine a valid set of configuration parameters that can be used to access the user's mailbox. Therefore, it is possible to determine the set of configuration parameters for the user's mailbox even if the user is unable to provide all of the necessary configuration information. All that may be required from the user is an email address and password, from which the system may be able to successfully determine the configuration parameters in most cases. As new conventions are introduced or are discovered, they may be easily added to the data store.

The configuration parameters could be represented using symbolic expressions, which may then be retained in the configuration conventions data store 218 for use by the service. This allows the service to draw configuration conventions from the data store, and using context data, to construct a valid set of configuration parameters that can be used to access mailboxes.

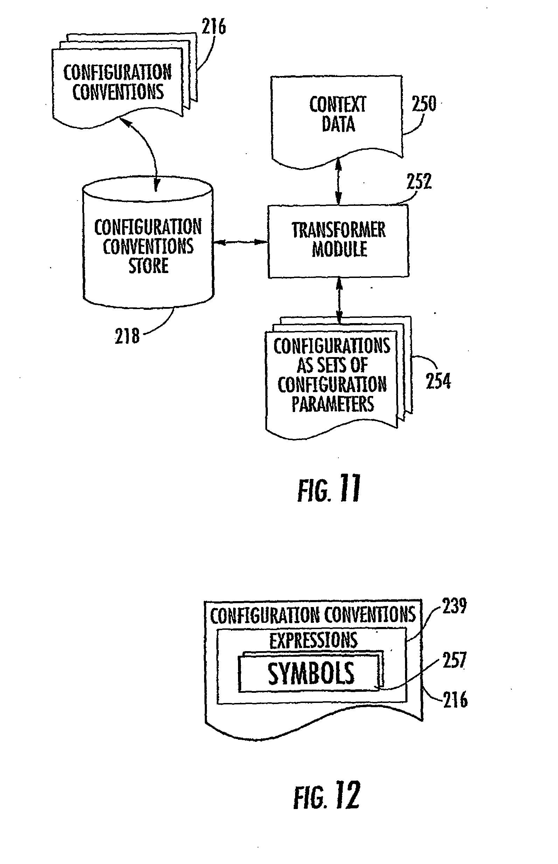

FIG. 11 illustrates an example of a system for generating configurations that comprise sets of configuration parameters **254.** A transformer module **252** as part of server **211** takes configuration conventions **216** stored in a configuration conventions data store **218** and expands them to generate configuration parameters **254** based on user supplied context data **250.**

FIG. 12 shows further details of the symbolic representation of configuration conventions **216.** The configuration conventions **216** symbolically represent the conventions used by email providers for a set of configuration parameters. The configuration conventions **216** comprise expressions **239** that represent individual configuration parameters using symbols **257.** In an example embodiment, the configuration convention **216** may be formed as an expression for the server name parameter, an expression for the login name parameter, and an expression for the mail protocol. If, in the example embodiment, the email provider uses the login name "jsmi" and the mail domain "mail.foo.com" given an email address "john.smith@foo.com", the login name expression in the configuration convention **216** may be "<FirstName(1)><LastName(3)>", while the server name expression may be "mail.<MailDomain>". In this example, the number in brackets within the symbol **257** "<FirstName(1)>", represents the number of characters to be used from the user's first name parameter, i.e., "j". Similarly, the number in brackets in a symbol **257** "<LastName(3)>" represents the number of characters to be used from the user's last name, ie. "smi". As is obvious to one skilled in the art, a variety of different symbolic representations may be used to represent the conventions for configuration parameters. The choice of expressions **239** can be quite arbitrary, and are only limited by the requirement that the expression **239** can be expanded into a configuration parameter based on the context data **250** supplied to the transformer module **252.**

The configuration conventions data store **218** stores the configuration conventions **216.** As new conventions are introduced or discovered, they may be easily added to the configuration conventions data store **218.**

The transformer module **252** expands the individual expressions **239** into configuration parameters by expanding each symbol **257** into its corresponding value using context data **250.** In an example embodiment, a configuration convention **216** may comprise the mail protocol expression **239a,** "POP", the server name expression **239b** "mail.<MailDomain>" and the login name expression **239c** '<FirstName(1)><LastName(3)>", for example, as shown in FIG. 11 for a plurality of expressions. If the transformer module **252** were provided with the context data **250** comprising the email address "john.smith@foo.com", the transformer module **252** would infer the mail domain as "foo.com" from the email address. It would then generate the configuration parameters **234** of "POP" for the mail protocol, "mail.foo.com" for the server name, and "jsmi" for the login name.

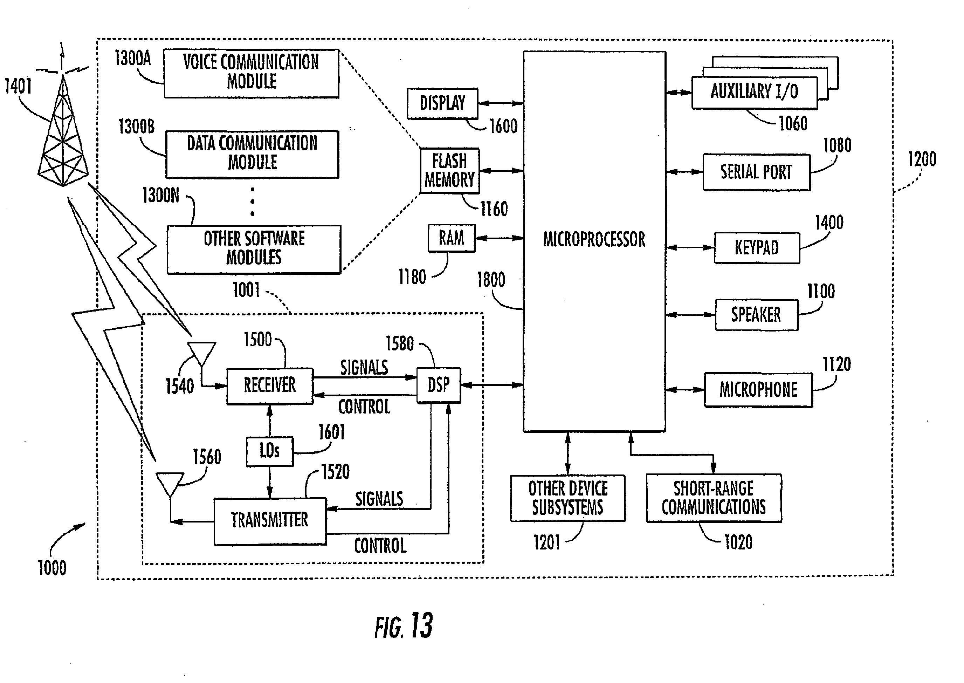

An example of a handheld mobile wireless communications device **1000** that may be used is further described in the example below with reference to FIG. 13. The device **1000** illustratively includes a housing 1200, a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 13. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A system (20) of provisioning a new electronic mail "email" account of a user, hosted by an email service provider for which the system has previously provisioned email accounts,
for allowing access to a user's electronic mailbox (51, 53) from a remote device (25) to retrieve user email, the system comprising:
a communications module (24b) for receiving email address parameters entered by a user for the email account; and
a configuration module (24a) operative to:
determine configuration parameters for provisioning the email account of the user based upon the email address parameters entered by the user, and
attempt provisioning based on the entered email address parameters and without requiring the user to enter other parameters
**characterised in that**
if provisioning fails, the communications module is adapted to inform the user that the entered email address parameters are incorrect and to request the user to enter corrected email address parameters

2. The system (20) according to Claim 1, wherein said communications module (24b) is operative for receiving an email address and password as the email address parameters.

3. The system (20) according to Claim 1, and further comprising a mobile office platform (24) in which said communications module (24b) and configuration module (24a) are operative, including a direct access proxy (40) used for accessing an electronic mailbox (51, 53) and email account information.

4. The system (20) according to Claim 1, wherein said communications module (24b) is operative for receiving reentered email address parameters by receiving one of least a new email address or password.

5. The system (20) according to Claim 1, wherein said configuration module (24a) is operative for generating a subset of possible configuration parameters by using heuristics of likelihood that a set of configuration parameters would be valid for accessing an electronic mailbox (51, 53).

6. The system (20) according to Claim 1, and further comprising a configuration conventions store (218) automatically storing learned configuration conventions used for determining configuration parameters.

7. A method of provisioning a new electronic mail "email" account of a user, hosted by an email service provider for which the system has previously provisioned email accounts for allowing access to a user's electronic mailbox (51, 53) from a remote device (25) to retrieve user email, the method comprising steps of:
receiving email address parameters entered by a user for the email account;
determining configuration parameters for provisioning the email account of the user based on the email address parameters
entered by the user without requiring the user to enter other parameters
**characterised in that**
if provisioning fails, informing the user that the email address parameters are incorrect and requesting the user to enter corrected email address parameters.

8. The method according to Claim 7, which further comprises receiving an email address and password as the email address parameters.

9. The method according to Claim 7, which further comprises receiving the email address parameters within a mobile office platform (24) having a direct access proxy (40) for accessing an electronic mailbox (51, 53) and email account information.

10. The method according to claim 7, which further comprises re-entering corrected email address parameters by entering one of least a new email address or password.

11. The method according to Claim 7, which further comprises generating a subset of possible configuration parameters by using heuristics of likelihood that a set of configuration parameters would be valid for accessing an electronic mailbox.

12. The method according to Claim 7, which further comprises accessing an email account and determining configuration parameters within a mobile office platform (24) having a direct access proxy (40) used for accessing an electronic mailbox (51, 53) and email account information.

13. The method according to Claim 7, which further comprises using automatically stored learned configuration conventions to determine configuration parameters.

14. A computer-readable medium having computer-executable instructions which when executed by a computer make the computer perform the steps of the method of claim 7.

15. A computer-readable medium according to Claim 14,
wherein said computer-executable instructions are operative for receiving an email address and password as the email address parameters.

## Patentansprüche

1. System (20) zum Bereitstellen eines neuen elektronischen Mail "E-Mail" Kontos eines Benutzers, das von einem E-Mail-Dienstanbieter bereitgestellt wird, für den das System vorher E-Mail-Konten bereitgestellt hat, um Zugriff auf ein elektronisches Postfach (51, 53) eines Benutzers von einer entfernten Vorrichtung (25) zu ermöglichen, um E-Mail des Benutzers abzurufen, wobei das System umfasst:
ein Kommunikationsmodul (24b) zum Empfangen von E-Mail-Adressparametern, die durch einen Benutzer für das E-Mail-Konto eingegeben werden; und
ein Konfigurationsmodul (24a), welches eingerichtet ist:
Konfigurationsparameter zur Bereitstellung des E-Mail-Kontos des Benutzers auf Basis der durch den Benutzer eingegebenen E-Mail-Adressparameter zu bestimmen, und
eine Bereitstellung zu versuchen, basierend auf den eingegebenen E-Mail-Adressparametern und ohne dass der Benutzer weitere Parameter eingeben muss;
**dadurch gekennzeichnet,**
**dass** im Fall eines Scheiterns der Bereitstellung, das Kommunikationsmodul eingerichtet ist, den Benutzer zu informieren, dass die eingegebenen E-Mail-Adressparameter inkorrekt sind, und den Benutzer aufzufordern, korrigierte E-Mail-Adressparameter einzugeben.

2. System (20) gemäß Anspruch 1, wobei das Kommunikationsmodul (24b) zum Empfangen einer E-Mail-Adresse und eines Passworts als die E-Mail-Adressparameter eingerichtet ist.

3. System (20) gemäß Anspruch 1, das weiter eine mobile Büroplattform (24) umfasst, in denen das Kommunikationsmodul (24b) und das Konfigurationsmodul (24a) ausführbar sind, beinhaltend einen direkten Zugang-Proxy (40), der für den Zugriff auf ein elektronisches Postfach (51, 53) und auf E-Mail-Konto-Information verwendet wird.

4. System (20) gemäß Anspruch 1, wobei das Kommunikationsmodul (24b) zum Empfangen wiedereingegebener E-Mail-Adressparameter durch ein Empfangen zumindest einer neuen E-Mail-Adresse oder eines Passworts eingerichtet ist.

5. System (20) gemäß Anspruch 1, wobei das Konfigurationsmodul (24a) eingerichtet ist, eine Teilmenge von möglichen Konfigurationsparametern durch eine Verwendung von Heuristiken für Wahrscheinlichkeiten zu erzeugen, dass eine Menge von Konfigurationsparametern für einen Zugriff auf ein elektronisches Postfach (51, 53) gültig ist.

6. System (20) gemäß Anspruch 1, das weiter einen Speicher für Konfigurationskonventionen (218) umfasst, der automatisch gelernte Konfigurationskonventionen speichert, die für das Bestimmen von Konfigurationsparametern verwendet werden.

7. Verfahren zum Bereitstellen eines neuen elektronischen Mail "E-Mail" Kontos eines Benutzers, das von einem E-Mail-Dienstanbieter bereitgestellt wird, für den das System vorher E-Mail-Konten bereitgestellt hat, um Zugriff auf ein elektronisches Postfach (51, 53) eines Benutzers von einer entfernten Einrichtung (25) zu ermöglichen, um E-Mail des Benutzers abzurufen, wobei das Verfahren umfasst:
Empfangen von E-Mail-Adressparametern, die durch einen Benutzer für das E-Mail-Konto eingegeben werden;
Bestimmen von Konfigurationsparametern zum Bereitstellen des E-Mail-Kontos des Benutzers basierend auf den durch den Benutzer eingegebenen E-Mail-Adressparametern ohne dass der Benutzer weitere Parameter eingeben muss,
**gekennzeichnet durch**,
im Fall eines Scheiterns der Bereitstellung, Informieren des Benutzers, dass die E-Mail-Adressparameter inkorrekt sind, und Auffordern des Benutzers, korrigierte E-Mail-Adressparameter einzugeben.

8. Verfahren gemäß Anspruch 7, das weiter ein Empfangen einer E-Mail-Adresse und eines Passworts als die E-Mail-Adressparameter umfasst.

9. Verfahren gemäß Anspruch 7, das weiter ein Empfangen der E-Mail-Adressparameter innerhalb einer mobilen Büroplattform (24) umfasst, wobei die mobile Büroplattform (24) einen direkten Zugang-Proxy (40) für den Zugriff auf ein elektronisches Postfach (51, 53) und auf E-Mail-Konto-Information enthält.

10. Verfahren gemäß Anspruch 7, das weiter ein Wiedereingeben korrigierter E-Mail-Adressparameter durch ein Eingegeben zumindest einer neuen E-Mail-Adresse oder eines Passworts umfasst.

11. Verfahren gemäß Anspruch 7, das weiter ein Erzeugen einer Teilmenge von möglichen Konfigurationsparametern durch eine Verwendung von Heuristiken für Wahrscheinlichkeiten umfasst, dass eine Menge von Konfigurationsparametern für den Zugriff auf ein elektronisches Postfach (51, 53) gültig ist.

12. Verfahren gemäß Anspruch 7, das weiter ein Zugreifen auf ein E-Mail-Konto und ein Bestimmen von Konfigurationsparametern innerhalb einer mobilen Büroplattform (24) umfasst, wobei die mobile Büroplattform (24) einen direkten Zugang-Proxy (40) enthält, der für den Zugriff auf ein elektronisches Postfach (51, 53) und auf E-Mail-Konto-Information verwendet wird.

13. Verfahren gemäß Anspruch 7, das weiter ein Verwenden von automatisch gespeicherten gelernten Konfigurationskonventionen umfasst, um Konfigurationsparameter zu bestimmen.

14. Computerlesbares Medium, das computerausführbare Anweisungen enthält, die bei Durchführung durch einen Computer den Computer veranlassen, die Schritte des Verfahrens gemäß Anspruch 7 auszuführen.

15. Computerlesbares Medium gemäß Anspruch 14, wobei die computerausführbaren Anweisungen zum Empfangen einer E-Mail-Adresse und eines Passworts als die E-Mail-Adressparameter eingerichtet sind.

## Revendications

1. Système (20) de création pour un utilisateur d'un nouveau compte de courrier électronique, courriel, hébergé par un fournisseur de service de courriel pour lequel le système a antérieurement créé des comptes de courriel, afin de donner accès à la boîte à lettres électronique d'un utilisateur (51, 53) à partir d'un dispositif distant (25) dans le but d'y relever le courriel de l'utilisateur, le système comprenant :
un module de communication (24b) destiné à recevoir des paramètres d'adresse de courriel saisis par un utilisateur pour le compte de courriel ; et
un module de configuration (24a) en mesure de :
déterminer des paramètres de configuration pour créer le compte de courriel de l'utilisateur en fonction des paramètres d'adresse de courriel saisis par l'utilisateur ; et
tenter la création en fonction des paramètres d'adresse de courriel saisis et sans exiger de l'utilisateur qu'il saisisse d'autres paramètres ;
**caractérisé en ce que** :
si la création échoue, le module de communication est conçu pour informer l'utilisateur que les paramètres d'adresse de courriel saisis sont incorrects et pour demander à l'utilisateur de saisir des paramètres d'adresse de courriel corrigés.

2. Système (20) selon la revendication 1, dans lequel ledit module de communication (24b) est en mesure de recevoir une adresse de courriel et un mot de passe comme paramètres d'adresse de courriel.

3. Système (20) selon la revendication 1, comprenant en outre une plate-forme de bureau mobile (24) dans laquelle fonctionnent ledit module de communication (24b) et ledit module de configuration (24a), comprenant un mandataire d'accès direct (40) utilisé pour accéder à une boîte à lettres électronique (51, 53) et à des informations de compte de courriel.

4. Système (20) selon la revendication 1, dans lequel ledit module de communication (24b) est en mesure de recevoir des paramètres d'adresse de courriel ressaisis en recevant au moins une nouvelle adresse de courriel ou un nouveau mot de passe.

5. Système (20) selon la revendication 1, dans lequel ledit module de configuration (24a) est en mesure de produire un sous-ensemble de paramètres de configuration possibles en utilisant une heuristique de probabilité indiquant qu'un ensemble de paramètres de configuration serait valide pour accéder à une boîte à lettres électronique (51, 53).

6. Système (20) selon la revendication 1, comprenant en outre une mémoire de conventions de configuration (218) qui stocke automatiquement des conventions de configuration apprises qui sont utilisées pour déterminer des paramètres de configuration.

7. Procédé de création pour un utilisateur d'un nouveau compte de courrier électronique, courriel, hébergé par un fournisseur de service de courriel pour lequel le système a antérieurement créé des comptes de courriel, afin de donner accès à la boîte à lettres électronique d'un utilisateur (51, 53) à partir d'un dispositif distant (25) dans le but d'y relever le courriel de l'utilisateur, le procédé comprenant les étapes consistant à :
recevoir des paramètres d'adresse de courriel saisis par un utilisateur pour le compte de courriel ; et
déterminer des paramètres de configuration pour créer le compte de courriel de l'utilisateur en fonction des paramètres d'adresse de courriel saisis par l'utilisateur ;
**caractérisé par** l'étape consistant à :
si la création échoue, informer l'utilisateur que les paramètres d'adresse de courriel sont incorrects et demander à l'utilisateur de saisir des paramètres d'adresse de courriel corrigés.

8. Procédé selon la revendication 7, comprenant en outre l'étape consistant à recevoir une adresse de courriel et un mot de passe comme paramètres d'adresse de courriel.

9. Procédé selon la revendication 7, comprenant en outre l'étape consistant à recevoir les paramètres d'adresse de courriel dans une plate-forme de bureau mobile (24) comportant un mandataire d'accès direct (40) destiné à accéder à une boîte à lettres électronique (51, 53) et à des informations de compte de courriel.

10. Procédé selon la revendication 7, comprenant en outre l'étape consistant à ressaisir des paramètres d'adresse de courriel corrigés en saisissant au moins une nouvelle adresse de courriel ou un nouveau mot de passe.

11. Procédé selon la revendication 7, comprenant en outre l'étape consistant à produire un sous-ensemble de paramètres de configuration possibles en utilisant une heuristique de probabilité indiquant qu'un ensemble de paramètres de configuration serait valide pour accéder à une boîte à lettres électronique.

12. Procédé selon la revendication 7, comprenant en outre l'étape consistant à accéder à un compte de courriel et à déterminer des paramètres de configuration au sein d'une plate-forme de bureau mobile (24) comprenant un mandataire d'accès direct (40) utilisé pour accéder à une boîte à lettres électronique (51, 53) et à des informations de compte de courriel.

13. Procédé selon la revendication 7, comprenant en outre l'étape consistant à utiliser des conventions de configuration apprises et enregistrées automatiquement pour déterminer des paramètres de configuration.

14. Support lisible par ordinateur portant des instructions exécutables par ordinateur qui, lorsqu'elles sont exécutées par un ordinateur, amènent l'ordinateur à réaliser les étapes du procédé selon la revendication 7.

15. Support lisible par ordinateur selon la revendication 14, dans lequel lesdites instructions exécutables par ordinateur sont en mesure de recevoir une adresse de courriel et un mot de passe comme paramètres d'adresse de courriel.
